# EUROPEAN PATENT APPLICATION

(11) **EP 3 778 824 A1**
(43) Date of publication of application: **17.02.2021**
(21) Application number: 19778274.1
(22) Date of filing: 14.03.2019
(51) Int. Cl.: C09K 3/18, C09D 127/06, C09D 127/08, C09D 127/16, C09D 133/16, D06M 15/256, D06M 15/277, D06M 15/353

(54) **OIL-REPELLENT AND WATER-REPELLENT AGENT COMPOSITION, ARTICLE, AND METHOD FOR PRODUCING ARTICLE**

(30) Priority: 26.03.2018 JP 2018058276
(71) Applicant: AGC INC., Chiyoda-ku, Tokyo 1008405 (JP)
(72) Inventor: SHIOTA, Yukiko, Tokyo 100-8405 (JP); HARA, Hiroyuki, Tokyo 100-8405 (JP); OOMORI, Yuuichi, Tokyo 100-8405 (JP); FUKUDA, Reika, Tokyo 100-8405 (JP)
(74) Representative: Müller-Boré & Partner Patentanwälte PartG mbB
(86) International application number: PCT/JP2019/010668
(87) International publication number: WO 2019/188369

(57) **Abstract**

Provided is an environmentally friendly water/oil repellent composition which makes it possible to provide an article with wash-durable water/oil repellency having an anti-peeling moisture permeable waterproof coating, without strike-through of a coating liquid for the moisture permeable waterproof coating. A water/oil repellent composition comprising a copolymer A which comprises units based on a monomer (m1), units based on a monomer (m2), and if necessary, units based on a monomer (m3), a copolymer B which comprises units based on a monomer (m1), units based on a monomer (m2), units based on a monomer (m3) and units based on a monomer (m4), a copolymer C which comprises units based on a monomer (m1) and units based on a monomer (m3), and a liquid medium,
wherein the ratio of the copolymer A is from 20 to 60 mass%, the ratio of the copolymer B is from 10 to 50 mass%, and the ratio of the copolymer C is from 25 to 70 mass%: monomer (m1): a monomer having a C₁₋₆ polyfluoroalkyl group, monomer (m2): vinylidene chloride or vinylidene fluoride, monomer (m3): a (meth)acrylate having a C₁₂ or higher saturated hydrocarbon group; and monomer (m4): vinyl chloride.

## Description

### TECHNICAL FIELD

The present invention relates to a water/oil repellent composition, an article having a porous substrate treated with the water/oil repellent composition and a method for producing the article.

### BACKGROUND ART

Articles made of porous substrates (such as cloth) having a surface treated with a water/oil repellent composition (fiber products such as sportswear) sometimes come with a moisture permeable waterproof coating on the surface to impart the function of preventing rain penetration while allowing release of sweat from the body as water vapor.

A moisture permeable waterproof coating is provided by laminating a film made of a polyurethane resin, an acrylic resin, a polytetrafluoroethylene resin or the like to the surface of a porous substrate treated with a water/oil repellent composition, or by applying a coating liquid containing a polyurethane resin, an acrylic resin or the like and an organic solvent onto the surface of a porous substrate treated with a water/oil repellent composition.

The requirements for moisture permeable waterproof articles having a moisture permeable waterproof coating on a surface of a porous substrate are as follows.
- The water repellency of the porous substrate does not wane over repetitive washings of the moisture permeable waterproof article (wash-durable water repellency).
- The coating liquid applied has not penetrated the porous substrate treated with a water/oil repellent composition from one surface to the opposite surface (suppression of strike-through of a coating liquid).
- The moisture permeable waterproof coating is unlikely to peel off the surface of the porous substrate treated with a water/oil repellent composition (anti-peeling moisture permeable waterproof coating).

The following water/oil repellent composition was proposed as an environmentally friendly water/oil repellent composition to make it possible to provide an article with durable water/oil repellency having an anti-peeling moisture permeable waterproof coating, without strike-through of a coating liquid for the moisture permeable waterproof coating (Patent Document 1).

A water/oil repellent composition comprising a copolymer comprising from 40 to 95 mass% of units based on the following monomer (m1), from 1 to 60 mass% of units based on the following monomer (m2) and from 0 to less than 5 mass% of units based on the following monomer (m3), a copolymer comprising from 40 to 91 mass% of units based on the following monomer (m1), from 2 to 20 mass% of units based on the following monomer (m2), from 5 to 20 mass% of units based on the following monomer (m3) and from 2 to 20 mass% of units based on the following monomer (m4), and a liquid medium.
monomer (m1): a monomer having a C₁₋₆ polyfluoroalkyl group,
monomer (m2): vinylidene chloride or vinylidene fluoride,
monomer (m3): a (meth)acrylate having a C₁₂ or higher saturated hydrocarbon group, and
monomer (m4): vinyl chloride.

### PRIOR ART DOCUMENTS

### PATENT DOCUMENTS

Patent Document 1: WO2015/080060

### DISCLOSURE OF INVENTION

### TECHNICAL PROBLEM

But porous substrates treated with the water/oil repellent composition disclosed in Patent Document 1 cannot sufficiently repel N,N-dimethylformamide (hereinafter referred to as "DMF"). Therefore, when the coating liquid contains DMF as a solvent, it cannot prevent strike-through of the coating liquid sufficiently and allows the coating liquid applied to one surface of a porous substrate to penetrate to the opposite surface.

The present invention provides an environmentally friendly water repellent composition which makes it possible to provide an article with wash-durable water/oil repellency having an anti-peeling moisture permeable waterproof coating, without strike-through of a coating liquid for the moisture permeable waterproof coating, an environmentally friendly article with wash-durable water repellency having an anti-peeling moisture permeable waterproof coating formed without strike-through of a coating liquid, and a method for its production.

### SOLUTION TO PROBLEM

The present invention provides the following aspects.
<1> A water/oil repellent composition comprising:
   a copolymer A which comprises from 40 to 95 mass%, relative to all the units constituting the copolymer, of units based on the following monomer (m1) and from 1 to 60 mass%, relative to all the units constituting the copolymer, of units based on the following monomer (m2) and may comprise less than 5 mass%, relative to all the units constituting the copolymer, of units based on the following formula (m3);
   a copolymer B which comprises from 40 to 91 mass%, relative to all the units constituting the copolymer, of units based on the following monomer (m1), from 2 to 20 mass%, relative to all the units constituting the copolymer, of units based on the following monomer (m2), from 5 to 20 mass%, relative to all the units constituting the copolymer, of units based on the following monomer (m3) and from 2 to 20 mass%, relative to all the units constituting the copolymer, of units based on the following monomer (m4);
   a copolymer C which comprises from 15 to 70 mass%, relative to all the units constituting the copolymer, of units based on the following monomer (m1) and from 30 to 85 mass%, relative to all the units constituting the copolymer, of units based on the following monomer (m3); and
   a liquid medium,
      wherein the ratio of the copolymer A to the total mass of the copolymer A, the copolymer B and the copolymer C is from 20 to 60 mass%, the ratio of the copolymer B to the total mass of the copolymer A, the copolymer B and the copolymer C is from 10 to 50 mass%, and the ratio of the copolymer C to the total mass of the copolymer A, the copolymer B and the copolymer C is from 25 to 70 mass%:
      monomer (m1): a compound represented by the following formula (1):

      (Z-Q)nX ··· (1)

      wherein Z is a C₁₋₆ polyfluoroalkyl group or a group represented by any of the following formulae (2-1) to (2-3), Q is a bivalent organic group having no fluorine atoms or a single bond, n is 1 or 2, and X is a group represented by any of the following formulae (3-1) to (3-5) when n is 1, and a group represented by any of the following formulae (4-1) to (4-4) when n is 2;

      CᵢF₂ᵢ₊₁O(CFZ¹CF₂O)ⱼCFZ²- ··· (2-1)

      CᵢF₂ᵢ₊₁[CH₂CF₂]ᵥ- ··· (2-2)

      CiF₂ᵢ₊₁[CH₂CF₂]ᵥ[CF₂CF₂]ᵣ- ··· (2-3)

      wherein i is an integer of from 1 to 6, j is an integer of from 0 to 10, v is an integer of from 1 to 4, r is an integer of from 1 to 3, and each of Z¹ and Z² is independently a fluorine atom or a trifluoromethyl group;

      -CR²=CH₂ ··· (3-1)

      -C(O)OCR²=CH₂ ··· (3-2)

      -OC(O)CR²=CH₂ ··· (3-3)

      -OCH₂-Ph-CR²=CH₂ ··· (3-4)

      -OCH=CH₂ ··· (3-5)

      wherein R² is a hydrogen atom, a methyl group or a halogen atom, and Ph is a phenylene group;

      -CH[-(CH₂)ₘCR³=CH₂]- ··· (4-1)

      -CH[-(CH₂)ₘC(O)OCR³=CH₂]- ··· (4-2)

      -CH[-(CH₂)ₘOC(O)CR³=CH₂]- ··· (4-3)

      -OC(O)CH=CHC(O)O- ··· (4-4)

      wherein R³ is a hydrogen atom, a methyl group or a halogen atom, and m is an integer of from 0 to 4;
      monomer (m2): vinylidene chloride or vinylidene fluoride;
      monomer (m3): a (meth)acrylate having a C₁₂ or higher saturated hydrocarbon group; and
      monomer (m4): vinyl chloride.
<2> The water/oil repellent composition according to <1>, wherein the copolymer C comprises from 15 to 60 mass%, relative to all the units constituting the copolymer, of units based on the monomer (m1) and from 30 to 70 mass%, relative to all the units constituting the copolymer, of units based on the monomer (m3).
<3> The water/oil repellent composition according to <1> or <2>, wherein the copolymer C may comprise at most 10 mass%, relative to all the units constituting the copolymer, of units based on the monomer (m2).
<4> The water/oil repellent composition according to any one of <1> to <3>, wherein the copolymer A further comprises units based on the monomer (m4).
<5> The water/oil repellent composition according to any one of <1> to <4>, wherein the copolymer A further comprises units based on the following monomer (m5):
   monomer (m5): a monomer having no polyfluoroalkyl groups and having a crosslinkable functional group.
<6> The water/oil repellent composition according to any one of <1> to <5>, wherein the copolymer B further comprises units based on the following monomer (m5):
   monomer (m5): a monomer having no polyfluoroalkyl groups and having a crosslinkable functional group.
<7> The water/oil repellent composition according to any one of <1> to <6>, wherein the copolymer C further comprises units based on the monomer (m4).
<8> The water/oil repellent composition according to any one of <1> to <7>, wherein the copolymer C further comprises units based on the following monomer (m5):
   monomer (m5): a monomer having no polyfluoroalkyl groups and having a crosslinkable functional group.
<9> The water/oil repellent composition according to any one of <1> to <8>, wherein the copolymer C comprises units based on stearyl (meth)acrylate or behenyl (meth)acrylate as units based on the monomer (m3).
<10> The water/oil repellent composition according to any one of <1> to <9>, which further comprises at least one crosslinking agent selected from the group consisting of isocyanate crosslinking agents, methylol crosslinking agents, carbodiimide crosslinking agents and oxazoline crosslinking agents.
<11> An article which has a porous substrate having at least one water/oil repellent surface treated with the water/oil repellent composition as defined in any one of <1> to <10>, and a moisture permeable waterproof coating on at least one surface of the porous substrate.
<12> The article according to <11>, wherein the porous substrate has a first main surface and a second main surface opposite to the first main surface,
   both the first main surface and the second main surface are water/oil repellent surfaces, and
   the moisture permeable waterproof coating is provided on either the first main surface or the second main surface.
<13> The article according to <11> or <12>, wherein the porous substrate is a cloth.
<14> A method for producing an article having a porous substrate, which comprises treating at least one surface of the porous substrate with the water/oil repellent composition as defined in any one of <1> to <10> to form a water/oil repellent surface, and forming a moisture permeable waterproof coating on at least one surface of the porous substrate by applying a coating liquid containing an ingredient of the moisture permeable waterproof coating.
<15> The method for producing an article having a porous substrate according to <14>, wherein the porous substrate has a first main surface and a second main surface opposite to the first main surface, and
   the method comprises treating both the first main surface and the second main surface with the water/oil repellent composition, and
   forming the moisture permeable waterproof coating on either the first main surface or the second main surface.

### ADVANTAGEOUS EFFECTS OF INVENTION

The water/oil repellent composition of the present invention can provide an article with wash-durable water repellency having an anti-peeling moisture permeable waterproof coating without strike-through of a coating liquid for the moisture permeable waterproof coating. The water/oil repellent composition of the present invention is environmentally friendly.

The article of the present invention has wash-durable water repellency and an anti-peeling moisture permeable waterproof coating free from strike-through of a coating liquid for the moisture permeable waterproof coating and is environmentally friendly.

The method of the present invention for producing an article can produce an environmentally friendly article with wash-durable water repellency having an anti-peeling moisture permeable waterproof coating without strike-through of a coating liquid for the moisture permeable waterproof coating.

### DESCRIPTION OF EMBODIMENTS

Herein, a compound represented by the formula (1) will be referred to as a "compound (1)". Compounds represented by other formulae will also be referred to in the same manner.

Herein, a group represented by the formula (2-1) will be referred to as a "group (2-1)". Groups represented by other formulae will also be referred to in the same manner.

Herein, a "unit based on a monomer (m1)" will be referred to as a "unit (m1)". Units based on other monomers will also be referred to in the same manner.

The meanings of terms are as follows.

"(Meth)acrylate" herein is a generic name for acrylate or methacrylate.

"Ph" in chemical formulae means a phenylene group such as a 1,2-phenylene group, a 1,3-phenylene group, and a 1,4-phenylene group.

A "unit" is a generic term for an atomic group derived from 1 molecule of a monomer by polymerization directly, or by polymerization and subsequent partial chemical modification.

The "ratio of units based on a monomer" is determined by NMR analysis and elemental analysis. When it can be determined neither by NMR analysis nor elemental analysis, it may be calculated based on the amount of monomers charged at the time of preparation of the copolymer.

The mass average molecular weight (hereinafter referred to as "Mw") and the number average molecular weight (hereinafter referred to as "Mn") of a copolymer are molecular weights in terms of polystyrene measured by gel permeation chromatography (GPC).

A "solid content" is calculated as solid mass / sample mass x 100 wherein the sample mass is the mass of a sample before heating, and the solid mass is the mass of the sample after 4 hours of drying in a convection dryer at 120°C.

### <Water/oil repellent composition>

The water/oil repellent composition of the present invention comprises a copolymer A, a copolymer B, a copolymer C and a liquid medium.

The water/oil repellent composition of the present invention preferably contains a crosslinking agent.

The water/oil repellent composition of the present invention preferably contains a surfactant.

The water/oil repellent composition of the present invention may contain components other than the copolymers A to C, the liquid medium, the crosslinking agent and the surfactant (hereinafter sometimes referred to as "additional components"), if necessary.

### (Copolymer A)

The copolymer A comprises units (m1) and units (m2).

The copolymer A may comprise units (m3). When the copolymer A comprises units (m3), the ratio of units (m3) is less than a given value.

The copolymer A preferably further comprises units (m4).

The copolymer A preferably further comprises units (m5).

The copolymer A may comprise units based on a monomer (hereinafter referred to as a "monomer (m6)") other than units based on the monomer (m1), the monomer (m2), the monomer (m3), the monomer (m4) and the monomer (m5).

Two or more copolymers A may be used in combination.

The monomer (m1) is a compound represented by the following formula (1). The units (m1) impart water/oil repellency to the copolymer.

(Z-Q)nX ··· (1)

Z is a C₁₋₆ polyfluoroalkyl group or any of groups (2-1) to (2-3) represented by the following formulae (2-1) to (2-3):

CᵢF₂ᵢ₊₁O(CFZ¹CF₂O)ⱼCFZ²- ··· (2-1)

CᵢF₂ᵢ₊₁[CH₂CF₂]ᵥ- ··· (2-2)

CᵢF₂ᵢ₊₁[CH₂CF₂]ᵥ[CF₂CF₂]ᵣ- ··· (2-3)

wherein i is an integer of from 1 to 6, j is an integer of from 0 to 10, v is an integer of from 1 to 4, r is an integer of from 1 to 3, and each of Z¹ and Z² is independently a fluorine atom or a trifluoromethyl group.

The polyfluoroalkyl group is preferably a perfluoroalkyl group. The perfluoroalkyl group is preferably linear. The number of carbon atoms in the perfluoroalkyl group is preferably from 4 to 6.

As Z, the following groups may be mentioned:
F(CF2)4-, F(CF₂)₅-, F(CF2)6-, (CF3)2CF(CF2)2-, CₖF₂ₖ₊₁O[CF(CF₃)CF₂O]ₕ-CF(CF₃)-, CₖF₂ₖ₊₁[CH₂CF_{2w}-, CₖF₂ₖ₊₁[CH₂CF₂]_{w}[CF₂CF₂]ᵤ-,
wherein k is an integer of from 1 to 6, h is an integer of from 0 to 10, w is an integer of from 1 to 4, and u is an integer of from 1 to 3.

Q is a bivalent organic group having no fluorine atoms or a single bond.

The bivalent organic group is preferably an alkylene group. The alkylene group is preferably linear. The number of carbon atoms in the alkylene group is preferably from 1 to 6, more preferably from 2 to 4. The bivalent organic group may have -O-, -NH-, -CO-, -S-, -SO₂-, -CR⁴=CR⁵- (wherein each of R⁴ and R⁵ is independently a hydrogen atom or a methyl group), -Ph-C(O)O- or the like.

As Q, the following groups may be mentioned:
-CH₂-, -CH₂CH₂-, -(CH₂)₃-, -CH₂CH₂CH(CH₃)-, -CH=CH-CH₂-, -S-CH₂CH₂-, -CH₂CH₂-S-CH₂CH₂-, -CH₂CH₂-SO₂-CH₂CH₂-, -Q²-, -Q²-OC(O)NH-Q¹-NHC(O)O-(CₚH₂ₚ)-, CH₂CH₂-OC(O)-Ph-,
   wherein p is an integer of from 2 to 30.
Q¹ is a symmetric linear alkylene, arylene or aralkylene group. Q¹ is preferably -C₆H₁₂-, -Ph-CH₂-Ph- or -Ph-.
Q² is any of the following groups:
   -SO₂N(R¹)-C_{d}H_{2d}-, -CONHC_{d}H_{2d}-, -C_{q}H_{2q}-,
   wherein R¹ is a hydrogen atom or a C₁₋₄ alkyl group, d is an integer of from 2 to 8, and is an integer of from 1 to 20.

n is 1 or 2. n is preferably 1.

X is any of groups (3-1) to (3-5) represented by the following formulae (3-1) to (3-5) when n is 1, and is any of groups (4-1) to (4-4) represented by the following formulae (4-1) to (4-4) when n is 2:

-CR²=CH₂ (3-1)

-C(O)OCR²=CH₂ (3-2)

-OC(O)CR²=CH₂ (3-3)

-OCH₂-Ph-CR²=CH₂ (3-4)

-OCH=CH₂ (3-5)

wherein R² is a hydrogen atom, a methyl group or a halogen atom. The halogen atom is preferably a chlorine atom or a fluorine atom.

When n is 1, X is preferably a group (3-3).

-CH[-(CH₂)ₘCR³=CH₂]- (4-1)

-CH[-(CH₂)mC(O)OCR³=CH₂]- (4-2)

-CH[-(CH₂)ₘOC(O)CR³=CH₂]- (4-3)

-OC(O)CH=CHC(O)O- (4-4)

wherein R³ is a hydrogen atom, a methyl group or a halogen atom, and m is an integer of from 0 to 4
when n is 2, X is preferably a group (4-3).

The monomer (m1) is preferably a (meth)acrylate or 2-haloacrylate having a C₄₋₆ perfluoroalkyl group, considering the copolymerizability with other monomers and its contribution to the flexibility of a coating containing the copolymer, adhesion of the copolymer to a substrate, dispersibility of the copolymer in a liquid medium, ease of emulsion polymerization and the water/oil repellency of the copolymer.

The monomer (m1) is preferably a compound wherein Z is a C₄₋₆ perfluoroalkyl group, Q is a C₁₋₄ alkylene group, n is 1, X is a group (3-3) (wherein R² is a hydrogen atom, a methyl group, a fluorine atom or a chlorine atom).

As the monomer (m1), the following compounds are more preferred.

CF₃(CF₂)₅CH₂CH₂OC(O)C(CH₃)=CH₂

CF₃(CF₂)₅CH₂CH₂OC(O)CH=CH₂

CF₃(CF₂)₅CH₂CH₂OC(O)C(Cl)=CH₂

CF₃(CF₂)₃CH₂CH₂OC(O)C(CH₃)=CH₂

CF₃(CF₂)₃CH₂CH₂OC(O)CH=CH₂

CF₃(CF₂)₃CH₂CH₂OC(O)C(Cl)=CH₂

CF₃(CF2)₅CH₂OC(O)C(CH₃)=CH₂

CF₃(CF₂)₅CH₂OC(O)CH=CH₂

CF₃(CF₂)₅CH₂OC(O)C(Cl)=CH₂

CF₃(CF₂)₅CH₂CH₂OC(O)-Ph-OC(O)CH=CH₂

CF₃(CF₂)₅CH₂CH₂OC(O)-Ph-OC(O)C(CH₃)=CH₂

CF₃(CF₂)₃CH₂CH₂OC(O)-Ph-OC(O )CH=CH₂

CF₃(CF₂)₃CH₂CH₂OC(O)-Ph-OC(O)C(CH₃)=CH₂

Two or more monomers (m1) may be used.

The copolymer A, the copolymer B and the copolymer C may comprise the same or different units (m1). They preferably comprise the same units (m1) in view of the compatibility between the copolymers.

The monomer (m2) is vinylidene chloride or vinylidene fluoride. The presence of units (m2) improves the affinity for a substrate and the film-forming property of the copolymer. Therefore, just by dipping a substrate in the water/oil repellent composition, the copolymer can penetrate everywhere in the substrate and forms a uniform coating, even in hardly accessible interyarn spaces of the cloth after air-drying.

Two or more monomers (m2) may be used.

The copolymer A, the copolymer B and the copolymer C may comprise the same or different units (m2). They preferably comprise the same units (m2) in view of the compatibility between the copolymers.

The monomer (m3) is a (meth)acrylate having a C₁₂ or higher saturated hydrocarbon group. The monomer (m3) does not have a polyfluoroalkyl group. Units (m3) strengthen the bonding between a moisture permeable waterproof coating formed from a coating liquid to the coating of the water/oil repellent composition and impart water repellency to the copolymer probably through the strong affinity between hydrophobic hydrocarbon groups in them.

The number of carbon atoms in the saturated hydrocarbon group in the monomer (m3) is at least 12, preferably at least 16 and more preferably at least 18. When the saturated hydrocarbon group has at least 16 carbon atoms, the copolymer has excellent water repellency. The number of carbon atoms in the saturated hydrocarbon group is preferably at most 30, more preferably at most 24 because the copolymer would have a relatively low melting point and be easy to handle.

The saturated hydrocarbon group in the monomer (m3) may be a linear or branched alkyl group or a monocyclic or polycyclic cycloalkyl group.

Examples of the monomer (m3) include lauryl (meth)acrylate, cetyl (meth)acrylate, stearyl (meth)acrylate, and behenyl (meth)acrylate.

Two or more monomers (m3), if any, may be used.

The copolymer A, the copolymer B and the copolymer C may have the same or different units (m3). They preferably comprise the same units (m3) in view of the compatibility between the copolymers.

The monomer (m4) is vinyl chloride. The presence of units (m4) in the copolymer enables the water/oil repellent composition to form a strong coating which has strong adhesion to a substrate.

The monomer (m5) is a monomer having no polyfluoroalkyl groups and a crosslinkable functional group. The presence of units (m5) in the copolymer makes a moisture permeable waterproof coating less likely to peel off and makes it possible to provide a more wash-durable article having a porous substrate treated with the water/oil repellent composition.

The crosslinkable functional group is preferably a functional group having at least a covalent bond, an ionic bond or a hydrogen bond, or a functional group capable of forming a crosslink via such a bond. It may be a functional group having an active organic group or an element such as hydrogen or a halogen.

As the crosslinkable functional group, preferred are a hydroxyl group, an isocyanato group, a blocked isocyanato group, an alkoxysilyl group, an amino group, an N-hydroxymethylamido group, an N-alkoxymethylamido group, a silanol group, an ammonium group, an amido group, an epoxy group, an oxazoline group, a carboxy group, an alkenyl group and a sulfo group, and more preferred are a hydroxy group, a blocked isocyanato group, an amino group, an N-hydroxymethylamido group, an epoxy group, a carboxy group and an alkoxysilyl group because they can react with isocyanato groups in a urethane resin in a moisture permeable waterproof coating or with functional groups in a crosslinking agent, which will be mentioned later, directly or via another compound (such as water).

The monomer (m5) is preferably a (meth)acrylate, acrylamide or a derivative thereof, a vinyl ether or a vinyl ester.

Examples of the (meth)acrylate as the monomer (m5) include the following compounds.

Glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl (meth)acrylate, dimethylaminoethyl (meth)acrylate, diethylaminoethyl (meth)acrylate, dimethylaminopropyl (meth)acrylate, hydroxyethyl (meth)acrylate polycaprolactone ester ("Placcel" FA and FM series, manufactured by Daicel Chemical Industries, Ltd.), 2-isocyanatoethyl (meth)acrylate, 3-isocyanatopropyl (meth)acrylate, 4-isocyanatobutyl (meth)acrylate, 2-butanone oxime adduct of 2-isocyanatoethyl (meth)acrylate, pyrazole adduct of 2-isocyanatoethyl (meth)acrylate, 3,5-dimethylpyrazole adduct of 2-isocyanatoethyl (meth)acrylate, 3-methylpyrazole adduct of 2-isocyanatoethyl (meth)acrylate, ε-caprolactam adduct of 2-isocyanatoethyl (meth)acrylate, 2-butanone oxime adduct of 3-isocyanatopropyl (meth)acrylate, pyrazole adduct of 3-isocyanatopropyl (meth)acrylate, 3,5-dimethylpyrazole adduct of 3-isocyanatopropyl (meth)acrylate, 3-methylpyrazole adduct of 3-isocyanatopropyl (meth)acrylate, ε-caprolactam adduct of 3-isocyanatopropyl (meth)acrylate, 2-butanone oxime adduct of 4-isocyanatobutyl (meth)acrylate, pyrazole adduct of 4-isocyanatobutyl (meth)acrylate, 3,5-dimethylpyrazole adduct of 4-isocyanatobutyl (meth)acrylate, 3-methylpyrazole adduct of 4-isocyanatobutyl (meth)acrylate and ε-caprolactam adduct of 4-isocyanatobutyl (meth)acrylate.

(Meth)acrylates more preferred as the monomer (m5) are glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl (meth)acrylate, dimethylaminoethyl (meth)acrylate, diethylaminoethyl (meth)acrylate, dimethylaminopropyl (meth)acrylate, polycaprolactone ester of hydroxyethyl (meth)acrylate ("Placcel" FA and FM series, manufactured by Daicel Chemical Industries, Ltd.), 2-isocyanatoethyl (meth)acrylate,3-isocyanatopropyl (meth)acrylate, 2-butanone oxime adduct of 2-isocyanatoethyl (meth)acrylate, 3,5-dimethylpyrazole adduct of 2-isocyanatoethyl (meth)acrylate, ε-caprolactam adduct of 2-isocyanatoethyl (meth)acrylate, 2-butanone oxime adduct of 3-isocyanatopropyl (meth)acrylate, 3,5-dimethylpyrazole adduct of 3-isocyanatopropyl (meth)acrylate and ε-caprolactam adduct of 3-isocyanatopropyl (meth)acrylate.

Examples of acrylamide or derivatives thereof as the monomer (m5) include the following compounds.

(Meth)acrylamide, N-methyl(meth)acrylamide, N-methylol(meth)acrylamide, N-butoxymethyl(meth)acrylamide, methoxymethyl(meth)acrylamide, ethoxymethyl(meth)acrylamide, butoxymethyl(meth)acrylamide and diacetone (meth)acrylamide.

Examples of the vinyl ether as the monomer (m5) include the following compounds.

2-Chloroethyl vinyl ether, 2-hydroxyethyl vinyl ether, 3-hydroxypropyl vinyl ether, 2-hydroxypropyl vinyl ether, 2-hydroxyisopropyl vinyl ether, 4-hydroxybutyl vinyl ether, 4-hydroxycyclohexyl vinyl ether, hexamethylene glycol monovinyl ether, 1,4-cyclohexanedimethanol monovinyl ether, diethylene glycol monovinyl ether, triethyleneglycol monovinyl ether, dipropyleneglycol monovinyl ether, glycidyl vinyl ether, 2-aminoethyl vinyl ether, 3-aminopropyl vinyl ether, 2-aminobutyl vinyl ether and allyl vinyl ether.

Other examples of the monomer (m5) include the following compounds.

3-Methacryloyloxypropyltrimethoxysilane, trimethoxyvinylsilane,
vinyltrimethoxysilane, (meth)acryloyloxyethyltrimethylammonium chloride, (meth)acryloyloxypropyltrimethylammonium chloride,
(meth)acrylamidoethyltrimethylammonium chloride and
(meth)acrylamidopropyltrimethylammonium chloride.

As the monomer (m5), preferred are (meth)acrylates, acrylamide and derivatives thereof, and more preferred are 3,5-dimethylpyrazole adduct of 2-isocyanatoethyl (meth)acrylate, 2-butanone oxime adduct of 2-isocyanatoethyl (meth)acrylate, 2-hydroxyethyl (meth)acrylate, N-methylol(meth)acrylamide, glycidyl (meth)acrylate, 3-chloro-2-hydroxypropyl methacrylate, glycerin mono(meth)acrylate, and polycaprolactone ester of hydroxyethyl (meth)acrylate ("Placcel" FA and FM series, manufactured by Daicel Chemical Industries, Ltd.), and further preferred are 3,5-dimethylpyrazole adduct of 2-isocyanatoethyl(meth)acrylate, 2-butanone oxime adduct of 2-isocyanatoethyl (meth)acrylate, 2-hydroxyethyl (meth)acrylate, N-methylol(meth)acrylamide, glycidyl (meth)acrylate, 3-chloro-2-hydroxypropyl methacrylate and glycerin mono(meth)acrylate.

Two or more monomers (m5), if any, may be used.

The copolymer A, the copolymer B and the copolymer C may comprise the same or different units (m5). They preferably comprise different units (m5) in view of the adhesion to a substrate.

The presence of units (m6), if any, makes is easy to form a water/oil repellent coating by the water/oil repellent treatment and to adjust the water/oil repellency and peeling strength to desired levels.

The monomer (m6) is preferably a (meth)acrylate or an unsaturated carboxylic acid ester.

The (meth)acrylate as the monomer (m6) is preferably an alkyl (meth)acrylate having a C₁₁ or lower alkyl group or a cycloalkyl (meth)acrylate having a monocyclic or polycyclic C₅₋₁₁ cycloalkyl group.

The unsaturated carboxylic acid ester as the monomer (m6) is preferably of an unsaturated monocarboxylic acid monoalkyl ester having a C₁₋₁₂ alkyl group or an unsaturated dicarboxylic acid dialkyl ester having C₁₋₁₂ alkyl groups.

Examples of the (meth)acrylate as the monomer (m6) include the following compounds.

Methyl (meth)acrylate, ethyl (meth)acrylate, propyl (meth)acrylate, n-butyl (meth)acrylate, t-butyl (meth)acrylate, i-butyl (meth)acrylate, cyclohexyl (meth)acrylate, 2-ethylhexyl (meth)acrylate, n-hexyl (meth)acrylate, benzyl (meth)acrylate, octyl (meth)acrylate, isobornyl (meth)acrylate, dicyclopentanyl (meth)acrylate, dicyclopentenyl (meth)acrylate, (meth)acrylates having repeated siloxane bonds in the pedant group and (meth)acrylates having a urethane bond.

Examples of the unsaturated carboxylic acid ester as the monomer (m6) include the following compounds.

Alkyl esters of crotonic acid, alkyl esters of maleic acid such as diethyl maleate, dipropyl maleate and dioctyl maleate, alkyl esters of fumaric acid such as diethyl fumarate and dipropyl fumarate, alkyl esters of citraconic acid, alkyl esters of mesaconic acid and allyl acetate.

Other examples of the monomer (m6) include the following compounds.

N-Vinylcarbazole, maleimide, N-methylmaleimide, vinylpyrrolidone and vinyl acetate.

Two or more monomers (m6), if any, may be used.

The copolymer A, the copolymer B and the copolymer C may comprise, if any, the same or different units (m6).

The copolymer A preferably comprises the following combinations of units based on monomers in view of water/oil repellency and prevention of strike-through of a coating liquid.

The combination of:
units (m1): units based on a (meth)acrylate having a C₄₋₆ perfluoroalkyl group or an acrylate having a chlorine atom at the α-position (i.e., R² is a chlorine atom),
units (m2): units based on vinylidene chloride,
units (m4): units based on vinyl chloride, and
units (m5): units based on preferred embodiments mentioned above.

The copolymer A preferably comprises the following combination of units based on monomers in view of both miscibility with other copolymers and prevention of strike-through of a coating liquid.

The combination of:
units (m1): units based on a (meth)acrylate having a C₄₋₆ perfluoroalkyl group or an acrylate having a chlorine atom at the α-position (i.e., R² is a chlorine atom),
units (m2): units based on vinylidene chloride,
units (m3): units based on preferred embodiments mentioned above, and
units (m6): units based on preferred embodiments mentioned above.

The ratio of units (m1) to all the units constituting the copolymer A is from 40 to 95 mass%, preferably from 45 to 95 mass%, more preferably from 45 to 91 mass%.

The ratio of units (m2) to all the units constituting the copolymer A is from 1 to 60 mass%, preferably from 1 to 51 mass%, more preferably from 5 to 51 mass%.

When the copolymer A comprises units (m3), the ratio of units (m3) to all the units constituting the copolymer A is at most 5 mass%, preferably at most 4 mass%, more preferably at most 3 mass%, further preferably at most 2 mass%, particularly preferably at most 1 mass%, most preferably 0 mass%. When the copolymer A comprises units (m3), the lower limit for the ratio of units (m3) is preferably 0.1 mass%, more preferably 0.3 mass%.

The ratio of units (m4) to all the units constituting the copolymer A is at most 15 mass%, more preferably at most 10 mass% and may be 0 mass%. When the copolymer A comprises units (m4), it is preferably at least 1 mass%, more preferably at least 3 mass% to secure the effect of the units (m4).

The ratio of units (m5) to all the units constituting the copolymer A is preferably at most 10 mass%, more preferably at most 5 mass% and may be 0 mass%. When the copolymer A comprises units (m5), it is preferably at least 0.1 mass%, more preferably at least 0.5 mass% to secure the effect of the units (m5).

The ratio of units (m6) to all the units constituting the copolymer A is preferably at most 30 mass%, more preferably at most 20 mass% and may be 0 mass%. When the copolymer A comprises units (m6), it is preferably at least 5 mass%, more preferably at least 10 mass% to secure the effect of the units (m6).

The Mw of the copolymer A is preferably at least 10,000, more preferably at least 20,000, further preferably at least 100,000. When the Mw of the copolymer A is at the above-mentioned lower limit or above, the copolymer A has good water/oil repellency.

The Mw of the copolymer A is preferably at most 1,000,000, more preferably at most 500,000, further preferably at most 250,000. When the Mw of the copolymer A is at the above-mentioned upper limit or below, the resulting water/oil repellent composition shows good film-forming properties when applied to a surface of a porous substrate.

The Mn of the copolymer A is preferably at least 10,000, more preferably at least 20,000, further preferably at least 25,000. When the Mw of the copolymer A is at the above-mentioned lower limit or above, the copolymer A has good water/oil repellency.

The Mn of the copolymer A is preferably at most 80,000, more preferably at most 60,000, further preferably at most 50,000. When the Mw of the copolymer A is at the above-mentioned upper limit or below, the resulting water/oil repellent composition shows good film-forming properties when applied to a surface of a porous substrate. The copolymer A preferably falls within either the above-mentioned Mw range or the above-mentioned Mn range, and more preferably falls within both ranges.

### (Copolymer B)

The copolymer B comprises units (m1), units (m2), units (m3) and units (m4).

The copolymer B preferably further comprises units (m5).

The copolymer B may comprise units (m6), if necessary.

Two or more copolymers B may be used in combination.

The monomer (m1), the monomer (m2), the monomer (m3), the monomer (m4), the monomer (m5) and the monomer (m6) to be used for the polymer B may be similar to the monomer (m1), the monomer (m2), the monomer (m3), the monomer (m4), the monomer (m5) and the monomer (m6) to be used for the copolymer A, and their preferred examples are also similar to those mentioned as preferred for the copolymer A.

The copolymer B preferably comprises the following combination of units based on monomers in view of water/oil repellency and prevention of peeling of a moisture permeable waterproof coating.

The combination of:
units (m1): units based on a (meth)acrylate having a C₄₋₆ perfluoroalkyl group or an acrylate having a chlorine atom at the α-position (i.e., R² is a chlorine atom),
units (m2): units based on vinylidene chloride,
units (m3): units based on preferred embodiments mentioned above.
units (m4): units based on vinyl chloride, and
units (m5): units based on preferred embodiments mentioned above.

The copolymer B preferably comprises the following combination of units based on monomers in view of prevention of peeling of a moisture permeable waterproof coating.

The combination of:
units (m1): units based on a (meth)acrylate having a C₄₋₆ perfluoroalkyl group or an acrylate having a chlorine atom at the α-position (i.e., R² is a chlorine atom),
units (m2): units based on vinylidene chloride,
units (m3): units based on preferred embodiments mentioned above.
units (m4): units based on vinyl chloride, and
units (m6): units based on preferred embodiments mentioned above.

The ratio of units (m1) to all the units constituting the copolymer B is from 40 to 91 mass%, preferably from 45 to 91 mass%, more preferably from 45 to 85 mass%.

The ratio of units (m2) to all the units constituting the copolymer B is from 2 to 20 mass%, preferably from 2 to 19 mass%, more preferably from 3 to 19 mass%.

The ratio of units (m3) to all the units constituting the copolymer B is from 5 to 20 mass%, preferably from 5 to 18 mass%, more preferably from 5 to 15 mass%.

The ratio of units (m4) to all the units constituting the copolymer B is from 2 to 20 mass%, preferably from 2 to 18 mass%, more preferably from 7 to 18 mass%.

The ratio of units (m5) to all the units constituting the copolymer B is at most 10 mass%, preferably at most 5 mass% and may be 0 mass%. When the copolymer B comprises units (m5), it is preferably at least 0.1 mass%, more preferably at least 0.5 mass% to secure the effect of units (m5).

The ratio of units (m6) to all the units constituting the copolymer B is at most 30 mass%, more preferably at most 20 mass% and may be 0 mass%. When the copolymer B comprises units (m6), it is preferably at least 5 mass%, more preferably at least 10 mass%.

The Mw of the copolymer B is preferably at least 10,000, more preferably at least 15,000, further preferably at least 20,000. When the Mw of the copolymer B is at the above-mentioned lower limit or above, the copolymer B has good water/oil repellency.

The Mw of the copolymer B is preferably at most 600,000, more preferably at most 400,000, further preferably at most 300,000, particularly preferably at most 150,000. When the Mw of the copolymer B is at the above-mentioned upper limit or below, the resulting water/oil repellent composition shows good film-forming properties when applied to a surface of a porous substrate.

The Mn of the copolymer B is preferably at least 8,000, more preferably at least 10,000, further preferably at least 12,000. When the Mw of the copolymer B is at the above-mentioned lower limit or above, the copolymer B has good water/oil repellency.

The Mn of the copolymer B is preferably at most 100,000, more preferably at most 80,000, further preferably at most 60,000, particularly preferably at most 50,000, most preferably at most 40,000. When the Mw of the copolymer B is at the above-mentioned upper limit or below, the resulting water/oil repellent composition shows good film-forming properties when applied to a surface of a porous substrate.

The copolymer B preferably falls within either the above-mentioned Mw range or the above-mentioned Mn range, and more preferably falls within both ranges.

### (Copolymer C)

The copolymer C comprises units (m1) and units (m3).

The copolymer C may comprise units (m2).

The copolymer C may comprise units (m4).

The copolymer C preferably further comprises units (m5).

The copolymer C may comprise units (m6), if necessary.

Two or more copolymers C may be used in combination.

The monomer (m1), the monomer (m2), the monomer (m3), the monomer (m4), the monomer (m5) and the monomer (m6) to be used for the polymer C may be similar to the monomer (m1), the monomer (m2), the monomer (m3), the monomer (m4), the monomer (m5) and the monomer (m6) to be used for the copolymer A, and their preferred examples are also similar to those mentioned as preferred for the copolymer A.

The units based on the monomer (m3) in the copolymer C are preferably units based on stearyl (meth)acrylate or behenyl (meth)acrylate.

The copolymer C preferably comprises the following combination of units based on monomers in view of prevention of strike-through of a coating liquid.

The combination of:
units (m1): units based on a (meth)acrylate having a C₄₋₆ perfluoroalkyl group or an acrylate having a chlorine atom at the α-position (i.e., R² is a chlorine atom),
units (m3): units based on stearyl (meth)acrylate or behenyl (meth)acrylate,
units (m4): units based on vinyl chloride, and
units (m5): units based on preferred embodiments mentioned above.

The copolymer C preferably comprises the following combination of units based on monomers in view of prevention of strike-through of a coating liquid and good film-forming properties that allow formation of a uniform coating.

The combination of:
units (m1): units based on a (meth)acrylate having a C₄₋₆ perfluoroalkyl group or an acrylate having a chlorine atom at the α-position (i.e., R² is a chlorine atom),
units (m2): units based on vinylidene chloride,
units (m3): units based on stearyl (meth)acrylate or behenyl (meth)acrylate,
units (m4): units based on vinyl chloride, and
units (m5): units based on preferred embodiments mentioned above.

The ratio of units (m1) to all the units constituting the copolymer C is from 15 to 70 mass%, preferably from 15 to 60 mass%, more preferably from 15 to 57 mass%, further preferably from 15 to 55 mass%.

The ratio of units (m2) to all the units constituting the copolymer C is preferably from 0 to 10 mass%, more preferably from 0 to 9 mass%, further preferably from 0 to 8 mass%.

The ratio of units (m3) to all the units constituting the copolymer C is from 30 to 85 mass%, preferably from 30 to 70 mass%, more preferably from 30 to 65 mass%, further preferably from 32 to 65 mass%.

The ratio of units (m4) to all the units constituting the copolymer C is preferably at most 40 mass%, more preferably at most 30 mass% and may be 0 mass%. When the copolymer C comprises units (m4), it is preferably at least 1 mass%, more preferably at least 3 mass% to secure the effect of units (m4).

The ratio of units (m5) to all the units constituting the copolymer C is preferably at most 10 mass%, more preferably at most 5 mass% and may be 0 mass%. When the copolymer C comprises units (m5), it is preferably at least 0.1 mass%, more preferably at least 0.5 mass% to secure the effect of units (m5).

The ratio of units (m6) to all the units constituting the copolymer C is preferably at most 30 mass%, more preferably at most 20 mass% and may be 0 mass%. When the copolymer C comprises units (m6), it is preferably at least 5 mass%, more preferably at least 10 mass% to secure the effect of units (m6).

The Mw of the copolymer C is preferably at least 1,000, more preferably at least 3,000, further preferably at least 10,000. When the Mw of the copolymer C is at the above-mentioned lower limit or above, the copolymer C has good water/oil repellency.

The Mw of the copolymer C is preferably at most 500,000, more preferably 200,000, particularly preferably at most 150,000. When the Mw of the copolymer C is at the above-mentioned upper limit or below, the resulting water/oil repellent composition shows good film-forming properties when applied to a surface of a porous substrate.

The Mn of the copolymer C is preferably at least 1,000, more preferably at least 3,000, further preferably at least 8,000. When the Mw of the copolymer C is at the above-mentioned lower limit or above, the copolymer C has good water/oil repellency.

The Mn of the copolymer C is preferably at most 70,000, more preferably at most 60,000, further preferably at most 40,000. When the Mw of the copolymer C is at the above-mentioned upper limit or below, the resulting water/oil repellent composition shows good film-forming properties when applied to a surface of a porous substrate.

The copolymer C preferably falls within either the above-mentioned Mw range or the above-mentioned Mn range, and more preferably falls within both ranges.

### (Production of copolymers)

The copolymers are produced, for example, by polymerizing a monomer component comprising the respective monomers mentioned above in a liquid medium in the presence of a polymerization initiator to obtain a copolymer solution, dispersion or emulsion.

Because the monomers polymerize almost completely, the ratios of the respective monomers in the monomer component should be similar to the above-mentioned ratios of units based on these monomers in each copolymer, and that holds true for their preferred embodiments.

The polymerization method may, for example, be solution polymerization, dispersion polymerization, emulsion polymerization or suspension polymerization, and emulsion polymerization is preferred. Further, the monomer component may be polymerized all at once or in multiple stages.

The copolymers are preferably produced in emulsions by polymerizing a monomer component comprising the above-mentioned respective monomers by emulsion polymerization in an aqueous medium in the presence of a surfactant and a polymerization initiator.

With a view to improving the yield of the copolymer, it is preferred to pre-emulsify a mixture comprising the monomer component, the surfactant and the aqueous medium, prior to the emulsion polymerization. For example, a mixture comprising the monomer component, the surfactant and the aqueous medium is mixed and dispersed by an ultrasonic stirring apparatus, a homomixer or a high pressure emulsifier.

The polymerization initiator may, for example, be a thermal polymerization initiator, a photopolymerization initiator, a radiation polymerization initiator, a radical polymerization initiator or an ionic polymerization initiator, and a water-soluble or oil-soluble radical polymerization initiator is preferred.

As the radical polymerization initiator, a common initiator such as an azo type polymerization initiator, a peroxide type polymerization initiator or a redox type initiator is employed depending upon the polymerization temperature. As the radical polymerization initiator, an azo type compound is particularly preferred, and when the monomer component is polymerized in an aqueous medium, a salt of an azo type compound is more preferred. The polymerization temperature is preferably from 20 to 150°C.

The amount of the polymerization initiator is preferably from 0.05 to 5 parts by mass, more preferably from 0.05 to 2 parts by mass, per 100 parts by mass of the monomer component.

At the time of polymerization of a monomer component, a molecular weight-controlling agent may be employed. The molecular weight-controlling agent is preferably an aromatic compound, a mercapto alcohol or a mercaptan, more preferably an alkylmercaptan.

The amount of the molecular weight-controlling agent is properly adjusted so that Mw and Mn of the resulting copolymer will be within the above-mentioned ranges.

As the liquid medium, the after-mentioned liquid medium may be mentioned, and an aqueous medium is preferred.

The aqueous medium may be the same aqueous medium as mentioned later, and the preferred embodiments are also the same as those mentioned later.

The surfactant may be the after-mentioned surfactant, and the preferred embodiments are also the same as those mentioned later.

The resulting emulsion preferably has a solid content of from 20 to 40 mass%, inclusive of not only the copolymers but also the surfactant, immediately after production of the copolymer. The content of the copolymer in the emulsion is preferably from 18 to 40 mass%, immediately after production of the copolymer.

### (Liquid medium)

The liquid medium may, for example, be water, an alcohol (such as an alkanoyl, an alkylene glycol or a polyalkylene glycol), a monoalkyl ether of a polyhydric alcohol, a halogen compound, a hydrocarbon, a ketone, an ester, an ether, a nitrogen compound, a sulfur compound, an inorganic solvent or an organic acid.

The alcohol is preferably a C₆ or lower alkanol, a dihydric C₄ or lower alcohol (such as an alkylene glycol), or an oligomer of a dihydric C₄ or lower alcohol (such as a dialkylene glycol or a trialkylene glycol).

The monoalkyl ether of a polyhydric alcohol is preferably a C₄ or lower monoalkyl ether of a C₄ or lower alkylene glycol or an oligomer thereof referred to as a polyalkylene glycol.

The liquid medium is preferably an aqueous medium in view of solvency and ease of handling.

The aqueous medium may be water or water containing a water-soluble organic solvent.

The water-soluble organic solvent may, for example, be tert-butanol, 3-methoxymethylbutanol, propylene glycol, dipropylene glycol, dipropylene glycol monomethyl ether or tripropylene glycol, and is preferably dipropylene glycol, tripropylene glycol or dipropylene glycol monomethyl ether.

When the aqueous medium contains a water-soluble organic solvent, the content of the water-soluble organic solvent is preferably from 1 to 80 parts by mass, more preferably from 10 to 60 parts by mass per 100 parts by mass of water.

### (Crosslinking agent)

The water/oil repellent composition of the present invention preferably comprises a crosslinking agent in view of adhesion of the water/oil repellent composition to a substrate. The crosslinking agent is preferably at least one crosslinking agent selected from the group consisting of isocyanate crosslinking agents, methylol crosslinking agents, carbodiimide crosslinking agents and oxazoline crosslinking agents in view of wash durability of water repellency and go durability.

As the isocyanate crosslinking agents, for example, blocked type aromatic isocyanate crosslinking agents, blocked type aliphatic isocyanate crosslinking agents, non-blocked type aromatic isocyanate crosslinking agents and non-blocked type aliphatic isocyanate crosslinking agents may be mentioned. Isocyanate crosslinking agents which are in the form of an aqueous dispersion containing a surfactant as an emulsifier or which have a hydrophobic group and are self-dispersible in water are preferred.

Methylol crosslinking agents are compounds having a methylol group attached to a nitrogen atom resulting from reaction of melamine, urea, an amide, an amine or the like with formaldehyde and their derivatives obtained by alkyletherification of the methylol group. Examples of methylol crosslinking agents are methylolmelamine which is a reaction product or precondensate of melamine and formaldehyde, methylolmelamine alkyl ether, methylolurea which is a reaction product or precondensate of urea and formaldehyde, methylol dihydroxyethylene urea and derivatives thereof, methylol ethylene urea, methylol propylene urea, methylol triazone, dicyandiamide-formaldehyde condensates and methylol carbamate, methylol (meth)acrylamide.

Carbodiimide crosslinking agents are polymers having a carbodiimide group in the molecule and are highly reactive with carboxy groups, amino groups, active hydrogen groups on a substrate or in the water/oil repellent composition.

Oxazoline crosslinking agents are polymers having an oxazoline group in the molecule and are highly reactive with carboxy groups on a substrate or in the water/oil repellent composition.

As other crosslinking agents, for examples, divinyl sulfone, polyamides and their cationic derivatives, polyamines and their cationic derivatives, epoxy derivatives (such as diglycidyl glycerol) and halide derivatives (such as (epoxy-2,3-propyl)trimethylammonium chloride and N-methyl-N-(epoxy-2,3-propyl)morpholinium chloride), isophthalic dihydrazide, adipic dihydrazide, sebacic dihydrazide, dodecanedioic dihydrazide, 1,6-hexamethylenebis(N,N-dimethylsemicarbazide), 1,1,1',1,'-tetramethyl-4,4'-(methylene-diparaphenylene)disemicarbazide, spiroglycol, ethylene glycol chloromethyl ether pyridinium salt, polyamine-polyamide-epichlorohydrin resins, polyvinyl alcohol and its derivatives, polyacrylamide and its derivatives, glyoxal resin type anticrease agents may be mentioned.

### (Surfactant)

The surfactant may, for example, be a hydrocarbon surfactant or a fluorinated surfactant, and each of which may, for example, be an anionic surfactant, a nonionic surfactant, a cationic surfactant, or an amphoteric surfactant. As the surfactant, in view of compatibility, it is preferred to use a nonionic surfactant and an amphoteric surfactant in combination, and in view of adhesion, it is preferred to use a nonionic surfactant alone or to use a nonionic surfactant and a cationic surfactant in combination. The mass ratio of a nonionic surfactant and a cationic surfactant (nonionic surfactant / cationic surfactant) is preferably from 97/3 to 40/60.

The nonionic surfactant is preferably at least one member selected from the group consisting of surfactants s¹ to s⁶ disclosed in WO2010/047258 and WO2010/123042.

When the surfactant comprises a cationic surfactant, the cationic surfactant is preferably surfactant s⁷ disclosed in WO2010/047258 and WO2010/123042.

When the surfactant comprises an amphoteric surfactant, the amphoteric surfactant is preferably surfactant s⁸ disclosed in WO2010/047258 and WO2010/123042.

As the surfactant, surfactant s⁹ (polymer surfactant) disclosed in WO2010/047258 and WO2010/123042 may also be used.

The preferred embodiments of the surfactant are the same as the preferred embodiments disclosed in WO2010/047258 and WO2010/123042.

Preferred nonionic surfactants are recited below.

C₁₈H₃₇O[CH₂CH(CH₃)O]₂-(CH₂CH₂O)₃₀H

C₁₈H₃₅O-(CH₂CH₂O)₂₆H

C₁₈H₃₅O-(CH₂CH₂O)₃₀H

C₁₈H₃₅O-(CH₂CH₂O)₁₃H

C₁₈H₃₇O-(CH₂CH₂O)₅₀H

C₁₆H₃₃O[CH₂CH(CH₃)O]₅-(CH₂CH₂O)₂₀H

C₁₂H₂₅O[CH₂CH(CH₃)O]₂-(CH₂CH₂O)₁₅H

(C₈H₁₇)(C₆H₁₃)CHO-(CH₂CH₂O)₁₅H

C₁₀H₂₁O[CH₂CH(CH₃)O]₂-(CH₂CH₂O)₁₅H

C₆F₁₃CH₂CH₂O-(CH₂CH₂O)₁₅H

C₆F₁₃CH₂CH₂O[CH₂CH(CH₃)O]₂-(CH₂CH₂O)₁₅H

C₄F9CH₂CH₂O[CH₂CH(CH₃)O]₂-(CH₂CH₂O)₁₅H

HO-(CH₂CH₂O)₁₅-(C₃H₆O)₃₅-(CH₂CH₂O)₁₅H

HO-(CH₂CH₂O)₈-(CH₃CH₆O)₃₅-(CH₂CH₂O)₈H

HO-(CH₂CH₂O)₉-(C₃H₆O)₂₀-(CH₂CH₂O)₉H

HO-(CH₂CH₂O)₄₅-(C₃H₆O)₁₇-(CH₂CH₂O)₄₅H

HO-(CH₂CH₂O)₃₄-(CH₂CH₂CH₂CH₂O)₂₈-(CH₂CH₂O)₃₄H

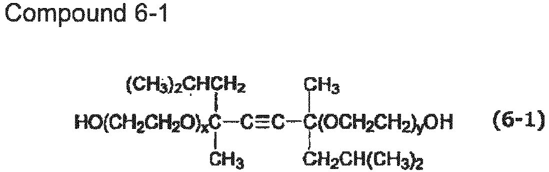

Each of x and y is an integer of from 0 to 100.

Compound 6-1 is preferably a compound wherein x and y are 0, wherein the sum of x and y is from 1 to 4 on average, or wherein the sum of x and y is from 10 to 30 on average.

As the cationic surfactant, stearyltrimethylammonium chloride, monostearyldimethylmonoethylammonium ethyl sulfate, mono(stearyl)monomethyldi(polyethylene glycol)ammonium chloride, monofluorohexyltrimethylammonium chloride, di(tallow alkyl)dimethylammonium chloride and dimethyl monococonut amine acetate are preferred.

As the amphoteric surfactant, dodecylbetaine, stearylbetaine, dodecyl carboxymethyl hydroxyethyl imidazolinium betaine, dodecyldimethylaminoacetic acid betaine and fatty acid amide propyldimethylaminoacetic acid betaine are preferred.

### (Other components)

As other components, a penetrant (a nonionic surfactant having a symmetric structure having an acetylene group at the center such as DISPANOL series manufactured by NOF CORPORATION), a defoamer (such as OLFINE series manufactured by Nissin Chemical Industry Co., Ltd. and FS Antifoam series manufactured by Dow Corning Toray Co., Ltd.), a water absorbent, an antistatic agent (such as Delectol series manufactured by Meisei Chemical Works, Ltd.), an anticrease agent, a mildewproofing agent, an antibacterial agent, a softener, a texture-adjusting agent, a film-forming assistant, a water-soluble polymer (such as a hydrophilic polyester or a derivative thereof, a hydrophilic polyethylene glycol or a derivative thereof, polyacrylamide or polyvinyl alcohol), colloidal silica (such as SNOWTEX series (product name) manufactured by Nissan Chemical Corporation or ADELITE series manufactured by ADEKA CORPORATION), a pH adjustor (such as diethanolamine, triethanolamine, acetic acid or citric acid), a thermosetting catalyst, a crosslinking catalyst, a synthetic resin, a fiber-stabilizer, a fluorine-free water repellent, a fluorinated copolymer other than the copolymers A to C and the like may be mentioned.

When the water/oil repellent composition of the present invention contains a methylol crosslinking agent or a glyoxal resin type anticrease agent, it is preferred to incorporate a catalyst in the composition. The catalyst may, for example, be an inorganic amine or an organic amine. The inorganic amine may, for example, be ammonium chloride. The organic amine may, for example, be an amino alcohol hydrochloride or semicarbazide hydrochloride. The amino alcohol hydrochloride may, for example, be monoethanolamine hydrochloride, diethanolamine hydrochloride, triethanolamine hydrochloride or 2-amino-2-methylpropanol hydrochloride.

### (Preparation of water/oil repellent composition)

The water/oil repellent composition is prepared by mixing an emulsion containing the copolymer A, an emulsion containing the copolymer B and an emulsion containing the copolymer C and further mixing in optional components, and, if necessary, may be diluted by adding a liquid medium.

The solid content of the water/oil repellent composition is preferably from 0.2 to 5 mass% at the time of treating the substrate. At a solid content of 0.2 mass% or above, the water/oil repellent composition develops sufficient water/oil repellency. At a solid content of 5 mass% or below, the water/oil repellent composition prevents strike-through of a coating liquid sufficiently.

The pH of the water/oil repellent composition may be adjusted, if necessary. The pH of the water/oil repellent composition is preferably from 3.0 to 7.0, more preferably from 5.0 to 7.0. At the lower limit of the above-mentioned pH range or above, the water/oil repellent composition adheres to the substrate in constant amounts via strong interaction with the substrate. At the upper limit of the above-mentioned range or below the water/oil repellent composition is stable.

The pH of the water/oil repellent composition may be adjusted, for example, with a pH adjustor such as acetic acid, hydrochloric acid, hydrobromic acid, phosphoric acid, formic acid, acetic acid, propionic acid, butyric acid, isobutyric acid, valeric acid, isovaleric acid, oxalic acid, malonic acid, succinic acid, glutaric acid, adipic acid, lactic acid, malic acid, citric acid, ascorbic acid, gluconic acid, diethanolamine and triethanolamine.

The ratio of the copolymer A to the total mass of the copolymer A, the copolymer B and the copolymer C is from 20 to 60 mass%, preferably from 20 to 55 mass%, more preferably from 20 to 50 mass%, further preferably from 25 to 50 mass%, particularly preferably from 30 to 50 mass%. When the ratio of the copolymer A is at the lower limit of the above-mentioned range or above, the water/oil repellent composition can confer good water/oil repellency and wash-durable water repellency.

The ratio of the copolymer B to the total mass of the copolymer A, the copolymer B and the copolymer C is from 10 to 50 mass% preferably from 15 to 50 mass%, more preferably from 20 to 50 mass%, further preferably from 25 to 50 mass%, particularly preferably from 30 to 50 mass%. When the ratio of the copolymer B is at the lower limit of the above-mentioned range or above, a moisture permeable waterproof coating hardly peels off.

The ratio of the copolymer C to the total mass of the copolymer A, the copolymer B and the copolymer C is from 25 to 70 mass% preferably from 30 to 65 mass%, more preferably from 30 to 60 mass%, further preferably from 30 to 55 mass%, particularly preferably from 30 to 50 mass%. When the ratio of the copolymer B is at the lower limit of the above-mentioned range or above, strike-through of a coating liquid can be prevented.

The proportion of the copolymer A, the copolymer B and the copolymer C to the total mass of the copolymer A, the copolymer B and the copolymer C (copolymer A/ copolymer B / copolymer C) is from 20 to 60 mass%/ from 10 to 50 mass%/ from 25 to 70 mass% and preferably from 20 to 40 mass%/ from 35 to 50 mass%/ from 25 to 45 mass%. When the proportion is within the above-mentioned range, a moisture permeable waterproof coating with high peel strength can be formed without strike-through of a coating liquid, and good water/oil repellency and wash-durable water repellency are obtained.

When the water/oil repellent composition comprises a crosslinking agent, the amount of the crosslinking agent is preferably from 1 to 200 parts by mass, more preferably from 5 to 200 parts by mass, further preferably from 10 to 180 parts by mass, per 100 parts by mass of the total mass of the copolymer A, the copolymer B and the copolymer C.

When the water/oil repellent composition comprises a surfactant, the amount of the surfactant is preferably from 1 to 10 parts by mass, more preferably from 1 to 9 parts by mass, further preferably from 1 to 7 parts by mass, per 100 parts by mass of the total mass of the copolymer A, the copolymer B and the copolymer C.

The ratio of the total mass of the copolymer A, the copolymer B and the copolymer C to the solid content of the water/oil repellent composition is preferably at least 50 mass%, preferably at least 65 mass%, more preferably at least 80 mass% and may be 100 mass%. The ratio of the total mass of the copolymer A, the copolymer B and the copolymer C is preferably at most 100 mass%, preferably at most 97 mass%, more preferably at most 95 mass%. When the ratio is within the above-mentioned range, a moisture permeable waterproof coating with high peel strength can be formed without strike-through of a coating liquid, and good water/oil repellency and wash-durable water repellency are obtained.

### (Mechanism)

The water/oil repellent composition of the present invention described so far owes its ability to provide an article with wash-durable water repellency to the copolymer A, owes its ability to provide an article with an anti-peeling moisture permeable waterproof coating to the copolymer B and owes its ability to provide an article with no strike-through of a coating liquid to the repellency of the copolymer C against organic solvents such as DMF.

Because none of the copolymers A to C comprise units based on a monomer having a C₇ or higher perfluoroalkyl group, the content of environmentally unfriendly perfluorooctanoic acid (PFOA), perfluoroocotanesulfonic acid (PFOS) and precursors and analogues thereof in the water/oil repellent composition of the present invention (at a solid content of 20 mass%) is below the detection limit of LC-MS/MS analysis described in WO2009/081822.

### (Applications)

The water/oil repellent composition of the present invention may be used for water/oil repellent treatment of a substrate. Especially, it is useful as a water/oil repellent when treatment of the substrate is followed by formation of a moisture permeable waterproof coating to produce an article.

The substrate to be treated may, for example, be fibers (natural fibers, synthetic fibers, mixed fibers, etc.), cloths (woven fabric, knitted fabric, nonwoven fabric, etc.), various fiber products (clothing (sportswear, coats, jumpers, workwear, uniforms, etc.), bags, industrial materials, etc.), resin products, paper, wood, leather, metal products, stone products, concrete products, gypsum products and glass products.

The treatment method may, for example, be a method of coating the substrate with a coating liquid containing the water/oil repellent composition by a known coating method, followed by drying, or a method of dipping the substrate in a coating liquid containing the water/oil repellent composition, followed by drying.

Further, after treatment with the water/oil repellent composition of the present invention, antistatic finish, softening finish, antibacterial finish, deodorant finish, waterproofing finish or bathochromic finish may, for example, be carried out.

### <Article>

The article of the present invention has a porous substrate having at least one water/oil repellent surface treated with the water/oil repellent composition, and has a moisture permeable waterproof coating on at least one surface of the porous substrate.

For example, when the porous substrate is in the form of a sheet having a first main surface and a second main surface opposite to the first main surface, the article may be such that the first main surface is a water/oil repellent surface and has the moisture permeable waterproof coating on it, or may be such that the first main surface is a water/oil repellent surface, while the second main surface is not treated with the water/oil repellent composition and has the moisture permeable waterproof coating on it, or may be such that both the first and second main surfaces are water/oil repellent surfaces, and either of them has the moisture permeable waterproof coating.

The article of the present invention is preferably such that both the first and second main surfaces are water/oil repellent surfaces, and either of them has the moisture permeable waterproof coating, in view of the water/oil repellency of the surface having no moisture permeable waterproof coating and prevention of strike-through.

The porous substrate may, for example, be a cloth (such as woven fabric, knitted fabric or a non-woven fabric), a porous fiber product (such as clothing), a porous resin sheet, pumice, wood or the like, and a cloth is particularly preferred.

The moisture permeable waterproof coating is a microporous polyurethane resin film, a non-porous polyurethane resin thin film, an acrylic resin film, a microporous polytetrafluoroethylene resin film or the like.

The article of the present invention is produced by a method comprising treating at least one surface of a porous substrate with the water/oil repellent composition of the present invention to form a water/oil repellent surface, and forming a moisture permeable waterproof coating on at least one surface of the porous substrate by applying a coating liquid containing an ingredient of the moisture permeable waterproof coating.

For example, when the porous substrate is in the form of a sheet having a first main surface and a second main surface opposite to the first main surface, the method may comprise treating the first main surface with the water/oil repellent composition and then forming the moisture permeable waterproof coating on the water/oil repellent first main surface, or may comprise treating the first main surface with the water/oil repellent composition and forming the moisture permeable waterproof coating on the second main surface which has not been treated with the water/oil repellent composition, or may comprise treating both the first main surface and the second main surface with the water/oil repellent composition and forming the moisture permeable waterproof coating on either the water/oil repellent first main surface or the water/oil repellent second main surface.

The article of the present invention is preferably produced by treating both the first main surface and the second main surface with the water/oil repellent composition and forming the moisture permeable waterproof coating on either of the first and second main surfaces of the porous substrate, in view of the water/oil repellency of the surface not having the moisture permeable waterproof coating and prevention of strike-through.

The moisture permeable waterproof coating may be formed, for example, by applying a coating liquid to a surface of the porous substrate, leaving the porous substrate at rest for a certain time, and then dipping the substrate in water for a predetermined time to remove the solvent, followed by drying.

As the coating method, various coating methods such as knife coating, knife over roll coating and reverse roll coating may be employed.

The coating liquid contains an ingredient of the moisture permeable waterproof coating, an organic solvent and the like. If necessary, the coating liquid may contain an assistant (such as a fluorinated water repellent, a crosslinking agent or a thickener).

The ingredient of the moisture permeable waterproof coating may, for example, be a polyurethane resin, an acrylic resin, a synthetic rubber, a vinyl resin (such as polyvinyl chloride) or the like. The ingredient of the moisture permeable waterproof coating is preferably a polyurethane resin, because it can form a flexible resin film.

The polyurethane resin is preferably a reaction product of a polyisocyanate and a polyol, for its workability.

The polyisocyanate may, for example, be an aromatic diisocyanate, an aliphatic diisocyanate or an alicyclic diisocyanate. Specifically, tolylene-2,4-diisocyanate, 4,4'-diphenylmethanediisocyanate, 1,6-hexanediisocyanate, 1,4-cyclohexanediisocyanate or the like may be mentioned. If necessary, a trifunctional or higher polyisocyanate may be used in combination. The polyisocyanate may be a single polyisocyanate or a combination of two or more species.

The polyol may, for example, be a polyether polyol or a polyester polyol. The polyether polyol may, for example, be polyethylene glycol, polypropylene glycol, or polytetraethylene glycol. The polyester polyol may, for example, be a reaction product of a diol (such as ethylene glycol or propylene glycol) and a dibasic acid (such as adipic acid or sebacic acid) or a ring-opening polymerization product of caprolactone. A polymer of an oxyacid monomer or a prepolymer thereof may also be used.

The solvent may, for example, be toluene, methyl ethyl ketone or a polar organic solvent. The organic solvent is preferably a polar organic solvent in view of the solubility of the ingredient of the moisture permeable waterproof coating in the organic solvent. The polar organic solvent may, for example, be DMF, N,N-dimethylacetamide, dimethyl sulfoxide, N-methylpyrrolidone or hexamethylenephosphonamide, and is particularly preferably DMF in view of the solubility of the ingredient of the moisture permeable waterproof coating in the organic solvent.

Because the porous substrate has at least one water/oil repellent surface treated with the water/oil repellent composition of the present invention, the article of the present invention described above has wash-durable water/oil repellency, no strike-through of a coating liquid and an anti-peeling moisture permeable waterproof coating and is environmentally friendly.

In the method for producing the article of the present invention described above, because the porous substrate has at least one water/oil repellent surface treated with the water/oil repellent composition of the present invention, it can produce an environmentally friendly article having wash-durable water/oil repellency having an anti-peeling moisture permeable waterproof coating without strike-through of a coating liquid. Because a coating liquid is unlikely to penetrate to the opposite surface of the porous substrate, an aesthetically excellent article can be produced.

### EXAMPLES

Now, the present invention will be described in detail with reference to Examples. However, it should be understood that the present invention is by no means restricted thereto.

Ex. 1 to 7 are Examples of the present invention, and Ex. 8 to 18 are comparative Examples.

### (Mw and Mn of Copolymers)

6 g of an emulsion of a copolymer was dripped to 60 g of 2-propanol (hereinafter referred to as IPA), and the resulting mixture was stirred to precipitate a solid. The mixture was centrifuged at 3,000 rpm for 5 minutes, and the resulting pellet was separated, resuspended in 12 g of IPA and then centrifuged at 3,000 rpm for 5 minutes. The resulting pellet was separated from the supernatant and dried in vacuo at 35°C overnight to recover the copolymer.

The recovered copolymer was dissolved in a solvent mixture of a fluorinated solvent (AK-225 manufactured by Asahi Glass Company, Limited)/ tetrahydrofuran (hereinafter referred to as "THF") = 6/4 (volume ratio) to form a solution having a solid content of 0.5 mass%. The solution was passed through a 0.2 µm filter to obtain a sample for analysis. Using the sample, the Mn and Mn were measured under the following conditions.

| | |
|---|---|
| Instrument: | HLC-8220 GPC manufactured by Tosoh Corporation, |
| Column: | in series, MIXED-C and 100A manufactured by Polymer laboratories connected |
| Measurementtemperature: | 37°C, |
| Injection volume: | 50 µL, |
| Flow rate: | 1 mL/min |
| Standard sample: | EasiCal PMMA-2 manufactured by Polymer laboratories, |
| Eluent: | a solvent mixture of AK-225/THF = 6/4 (volume ratio). |

### (Strike-through)

Before formation of a moisture permeable waterproof coating, a test cloth was left to stand with a drop (12 µm) of DMF on the surface for 3 minutes, and then the opposite surface was evaluated on the following scale by visual inspection.
○ (excellent): No penetration of DMF to the opposite surface of the test cloth.
Δ (good): Slight penetration of DMF to the opposite surface of the test cloth.
× (fail): Complete penetration of DMF to the opposite surface of the test cloth.

### (Peeling resistance of moisture permeable waterproof coating)

A heat seal tape (2.5 cm wide and 15 cm long) was bonded by hot press onto the moisture permeable waterproof coating of a test cloth having a moisture permeable waterproof coating. Using a Tensilon universal tester (AGS-X manufactured by Shimadzu Corporation), the force (peel strength, unit: N/2.5 cm) applied when the tape peeled off was measured in triplicate and averaged. The higher the peel strength, the harder the moisture permeable waterproof coating is to peel off. A peel strength of 6.0 N or above is considered acceptable.

### (Water repellency)

A test cloth having a moisture permeable waterproof coating was rated for water repellency of the surface opposite to the moisture permeable waterproof coating by the spray test in JIS L1092-1998 on the scale of from 1 to 5. The higher the rating, the better the water repellency. A test cloth with a rating of 3 or above is considered to be water repellent. The appendage + (-) to a grade indicates water repellency slightly better (or worse) than the standard level for the grade.

### (Wash durability of water repellency)

A test cloth having a moisture permeable waterproof coating was washed repeatedly 20 times in accordance with the water washing method in JIS L 0217 appendix 103. After washings, the test cloth was air-dried in a room kept at a temperature of 23°C at a humidity of 50% overnight, and then the water repellency was evaluated as described above.

### (Oil repellency)

A test cloth having a moisture permeable waterproof coating was rated for oil repellency of the surface opposite to the moisture permeable waterproof coating in accordance with AATCC-TM118-1966 on the scale shown in Table 1. The appendage + (-) to a grade indicates oil repellency slightly better (or worse) than the standard level for the grade.

**[Table 1]**

| Oil repellency No. | Test solution | Surface tension (25°C) [mN/m] |
|---|---|---|
| 8 | n-Heptane | 19.8 |
| 7 | n-Octane | 21.4 |
| 6 | n-Decane | 23.5 |
| 5 | n-Dodecane | 24.7 |
| 4 | n-Tetradecane | 26.4 |
| 3 | n-Hexadecane | 27.3 |
| 2 | 65 Parts of nujol/ 35 parts of hexadecane | 29.6 |
| 1 | Nujol | 31.2 |
| 0 | Less than 1 | - |

### (Monomers)

Monomer (m1)
C6FMA: CF₃(CF₂)₅CH₂CH₂OC(O)C(CH₃)=CH₂
Monomer (m2)
VdCl: Vinylidene chloride
Monomer (m3)
StA: Stearyl acrylate
BeA: Behenyl acrylate
Monomer (m4)
VCM: Vinyl chloride
Monomer (m5)
HEMA: 2-Hydroxyethyl methacrylate
NMAM aq.: 52 mass% aqueous solution of N-methylolacrylamide (NMAM)
MOI-BP: 3,5-Dimethylpyrazole adduct of 2-isocyanatoethyl methacrylate (Karenz MOI-BP, product name, manufactured by Showa Denko K.K.)
PEGMA: Polyethylene glycol monomethacrylate (BLEMMER PE-350, product name, manufactured by NOF Corporation)
Monomer (m6)
n-BMA: n-Butyl methacrylate

### (Surfactants)

PEO-13: Polyoxyethylene oleyl ether (adduct with about 12.8 moles of ethylene oxide; EMULGEN E420; product name, manufactured by Kao Corporation)

PEO-30 aq.: 10 mass% aqueous solution of polyoxyethylene oleyl ether (adduct with about 30 moles of ethylene oxide) (Emulgen E430; product name, manufactured by Kao Corporation)

PES-50 aq.: 10 mass% aqueous solution of polyoxyethylene stearyl ether (adduct with about 50 moles of ethylene oxide, Emulgen E350, product name, manufactured by Kao Corporation)

AGE-10: Acetylene glycol ethylene oxide adduct (adduct with about 10 moles of ethylene oxide, SURFYNOL 465, product name, manufactured by Nisshin Chemical Industry Co., Ltd.)

AGE-30: Acetylene glycol ethylene oxide adduct (adduct with about 30 moles of ethylene oxide, SURFYNOL 485, product name, manufactured by Nisshin Chemical Industry Co., Ltd.)

P104: Ethylene oxide propylene oxide polymer (average molecular weight: 1670, containing 40 mass% of ethylene oxide) (Pronon 104 (trade name); product name, manufactured by Nippon Oil Co., Ltd.)

P204: Ethylene oxide propylene oxide polymer (average molecular weight: 3330, containing 40 mass% of ethylene oxide) (Pronon 204 (trade name); product name, manufactured by Nippon Oil Co., Ltd.)

STMAC aq.: 63 mass% solution of C₁₆₋₁₈ alkyl trimethylammonium chloride chloride in water and isopropyl alcohol solution of (LIPOQUAD 18-63; product name, manufactured by of Lion Corporation)

CTMAC aq.: 20 mass% aqueous solution of 50 mass% solution of C₈₋₁₈ alkyl trimethylammonium chloride chloride in water and isopropyl alcohol (LIPOQUAD C-50; product name, manufactured by of Lion Corporation)

AM-3130N aq.: 30 mass% aqueous solution of cocoamidopropyl betaine (NIKKOL AM-3130N, manufactured by Nikko Chemicals Co., Ltd.)

### (Molecular weight-controlling agent)

StSH: Stearylmercaptan
DoSH: n-Dodecylmercaptan

### (Polymerization initiator)

V-50: 2,2'-Azobis(2-methylpropionamidine) dihydrochloride.
VA061A: 10 mass% aqueous solution (liquid) of the acetate of 2,2'-azobis[2-(2-imidazolin-2-yl)propane]] (VA-061, product name, manufactured by Wako Pure Chemical Industries, Ltd.)
DPG: Dipropylene glycol
Water: Ion-exchanged water

### (Preparation of copolymer)

The monomer (m1), monomer (m3), monomer (m5), monomer (m6), surfactants, liquid medium and molecular weight controlling agent shown in Table 2 were put in a glass vessel and heated at 60°C for 30 minutes and mixed with a homomixer (BIO MIXER manufactured by Nihonseiki Kaisha, Ltd.) to obtain a liquid mixture.

At 60°C, the resulting liquid mixture was emulsified with a high-pressure emulsifier (MiniLab, manufactured by APV Rannie) preliminarily under 10 MPa and then under 40 MPa to obtain an emulsion. The resulting emulsion was cooled in a stainless steel reactor to 30°C or below.

The polymerization initiator shown in Table 2 was added, and the gas phase was replaced with nitrogen. The monomer (m2) and monomer (m4) were introduced, and polymerization was carried out at 60°C for 15 hours with stirring to obtain an emulsion containing a copolymer. The solid content of the emulsion is shown in Table 2. Copolymers other than the copolymer A, the copolymer B and the copolymer C are referred to as copolymer D.

The ratios of respective units constituting copolymers, and the Mw and Mn are shown in Table 3. The ratios of respective units constituting copolymers were calculated from the amounts of monomers charged to produce the copolymers.

**[Table 2]**

| Charged amount (parts by mass) | | Copolymer | | | | | | |
|---|---|---|---|---|---|---|---|---|
| | | A-1 | B-1 | C-1 | C-2 | C-3 | D-1 | D-2 |
| Monomer (m1) | C6FMA | 204.0 | 194.9 | 153.0 | 48.1 | 162.0 | 226.7 | 174.9 |
| Monomer (m2) | VdCI | 33.6 | 13.5 | - | 17.0 | - | - | - |
| Monomer (m3) | StA | - | 19.0 | - | - | 155.5 | 21.5 | - |
| | BeA | - | - | 110.1 | 169.9 | - | - | - |
| Monomer (m4) | VCM | 15.5 | 40.6 | 39.8 | 45.3 | - | 46.0 | 81.6 |
| Monomer (m5) | HEMA | 5.2 | - | - | - | - | - | - |
| | NMAM aq. | - | 5.2 | 5.9 | 5.5 | - | - | - |
| | MOI-BP | - | - | - | - | 6.5 | 12.3 | - |
| | PEGMA | - | - | - | - | - | - | 5.8 |
| Monomer (m6) | n-BMA | - | - | - | - | - | - | 29.2 |
| Surfactant | PEO-13 | 5.2 | - | - | - | - | - | - |
| | PEO-30 aq. | - | - | 107.1 | 70.8 | - | 95.0 | 90.4 |
| | PES-50 aq. | - | 81.2 | - | - | - | - | - |
| | AGE-10 | - | 2.7 | - | - | - | - | - |
| | AGE-30 | 5.2 | - | - | - | 9.7 | - | - |
| | P104 | - | - | - | - | 6.5 | - | - |
| | P204 | 2.6 | 2.7 | 1.5 | 1.4 | - | 2.8 | 2.6 |
| | STMAC aq. | 2.1 | 6.5 | 2.4 | 4.5 | 5.1 | 4.4 | - |
| | CTMAC aq. | - | - | 7.7 | - | 6.5 | - | - |
| | AM-3130N aq. | - | - | - | - | - | - | 2.6 |
| Molecular weight controlling agent | StSH | 0.3 | 1.4 | 1.5 | 2.8 | - | - | - |
| | DoSH | - | - | - | - | 2.4 | 3.1 | 2.9 |
| Polymerization initiator | V-50 | 0.8 | - | - | 1.1 | - | - | - |
| | VA061A | - | 4.1 | 15.3 | - | 9.0 | 8.6 | 8.2 |
| Liquid medium | DPG | 77.5 | 81.2 | 107.1 | 85.0 | 162.0 | 91.9 | 145.8 |
| | Water | 398.3 | 397.0 | 398.6 | 398.6 | 374.8 | 432.0 | 306.0 |
| Solid content (mass%) | | 36.4 | 36.1 | 36.4 | 36.9 | 38.9 | 36.5 | 37.0 |

**[Table 3]**

| Ratio of unit (mass%) | | Copolymer | | | | | | |
|---|---|---|---|---|---|---|---|---|
| | | A-1 | B-1 | C-1 | C-2 | C-3 | D-1 | D-2 |
| Unit (m1) | C6FMA | 79 | 72 | 50 | 17 | 50 | 74 | 60 |
| Unit (m2) | VdCl | 13 | 5 | - | 6 | - | - | - |
| Unit (m3) | StA | - | 7 | - | - | 48 | 7 | - |
| | BeA | - | - | 36 | 60 | - | - | - |
| Unit (m4) | VCM | 6 | 15 | 13 | 16 | - | 15 | 28 |
| Unit (m5) | HEMA | 2 | - | - | - | - | - | - |
| | NMAM | - | 1 | 1 | 1 | - | - | - |
| | MOI-BP | - | - | - | - | 2 | 4 | - |
| | PEGMA | - | - | - | - | - | - | 2 |
| Unit (m6) | n-BMA | - | - | - | - | - | - | 10 |
| Mw | | 169,000 | 49,000 | 82,000 | 53,000 | 57,000 | 54,000 | 58,000 |
| Mn | | 44,000 | 16,000 | 23,000 | 18,000 | 20,000 | 32,000 | 23,000 |

### [EX. 1 to EX. 18]

Copolymers A to D were mixed in mixing ratios on a solid basis shown in Tables 4 to 6 and diluted with tap water to a solid content of 1.2 mass%. An isocyanato crosslinking agent (MEIKANATE FM-1, product name, manufactured by Meisei Chemical Works, Ltd.) was added to a concentration of 1 mass% to obtain water/oil repellent compositions.

High-density nylon taffeta cloths were dipped in the water/oil repellent compositions and nipped to a wet pickup of 45 to 50 mass% by padding. The cloths were dried at 170°C for 60 seconds and left in a room at 23°C under a humidity of 50% overnight to obtain test cloths. The results of the test for strike-through are shown in Tables 4 to 6.

50 g of a urethane prepolymer (RESAMINE CU-4700, product name, polyethylene adipate-MDI prepolymer manufactured by Dainichiseika Color & Chemicals Mfg. Co., Ltd.), 0.5 g of a crosslinking agent (Coronate HL, product name, manufactured by Tosoh Corporation), 1.0 g of a colorant (SEIKASEVEN ALT #8000, product name, manufactured by Dainichiseika Color & Chemicals Mfg. Co., Ltd.) and 25 g of DMF were mixed to obtain a coating liquid for formation of a moisture permeable waterproof coating.

The coating liquid was applied to the rear side of the test cloths using an applicator (RK Print Coat Instruments Ltd.) at a coating speed of 0.1 m/second at a coating liquid temperature of 35°C so that the dry thickness would be 40 µm. The coated test cloths were left at rest for 1 minute, dipped in water at 20°C for 2 minutes and then dipped in water at 40°C for 2 minutes, and dried at 120°C for 60 seconds to prepare test cloths with a moisture permeable waterproof coating. The results of evaluation of peeling strength, wash durability of water repellency and oil repellency are shown in Tables 4 to 6.

**[Table 4]**

| Water/oil repellent composition | | | Ex. 1 | Ex. 2 | Ex. 3 | Ex. 4 | Ex. 5 | Ex. 6 | Ex. 7 |
|---|---|---|---|---|---|---|---|---|---|
| Percentage on a solid basis (mass%) | Copolymer A | A-1 | 20 | 30 | 30 | 20 | 30 | 20 | 60 |
| | Copolymer B | B-1 | 50 | 30 | 30 | 50 | 20 | 10 | 10 |
| | Copolymer C | C-1 | 30 | 40 | - | - | 50 | 70 | 30 |
| | | C-2 | - | - | 40 | - | - | - | - |
| | | C-3 | - | - | - | 30 | - | - | - |
| | Copolymer D | D-1 | - | - | - | - | - | - | - |
| | | D-2 | - | - | - | - | - | - | - |
| Results of test cloth evaluation | Strike-through | | Δ | Δ | Δ | Δ | Δ | ○ | Δ |
| | Peeling strength (N/2.5 cm) | | 6.6 | 6.3 | 6.1 | 6.7 | 6.1 | 6 | 6.1 |
| | Water repellency | Initial | 5 | 5 | 5- | 5- | 5 | 5 | 5 |
| | | After 20 washings | 3++ | 3++ | 3+ | 3 | 3+ | 3+ | 3+ |
| | Oil repellency | Initial | 6 | 6- | 5 | 5 | 5+ | 5+ | 5 |

**[Table 5]**

| Water/oil repellent composition | | | Ex. 8 | Ex. 9 | Ex. 10 | Ex. 11 | Ex. 12 | Ex. 13 |
|---|---|---|---|---|---|---|---|---|
| Percentage on a solid basis (mass%) | Copolymer A | A-1 | 60 | 40 | 10 | 20 | 50 | 10 |
| | Copolymer B | B-1 | 40 | 40 | 10 | 60 | 5 | 20 |
| | Copolymer C | C-1 | - | 20 | 80 | 20 | 45 | 70 |
| | | C-2 | - | - | - | - | - | - |
| | Copolymer D | D-1 | - | - | - | - | - | - |
| | | D-2 | - | - | - | - | - | - |
| Results of test cloth evaluation | Strike-through | | × | × | ○ | × | Δ | ○ |
| | Peeling strength (N/2.5 cm) | | 7.5 | 6 | 4.5 | 7 | 4.3 | 6.1 |
| | Water repellency | Initial | 5- | 5 | 5 | 5 | 5 | 5 |
| | | After 20 washings | 3 | 3 | 2+ | 3+ | 3+ | 2+ |
| | Oil repellency | Initial | 5+ | 6- | 5+ | 5+ | 5+ | 5 |

**[Table 6]**

| Water/oil repellent composition | | | Ex. 14 | Ex. 15 | Ex. 16 | Ex. 17 | Ex. 18 |
|---|---|---|---|---|---|---|---|
| Percentage on a solid basis (mass%) | Copolymer A | A-1 | 70 | - | 30 | - | - |
| | Copolymer B | B-1 | 10 | - | - | - | 10 |
| | Copolymer C | C-1 | 20 | 80 | 70 | 70 | 70 |
| | | C-2 | - | - | - | - | - |
| | Copolymer D | D-1 | - | 20 | - | - | - |
| | | D-2 | - | - | - | 30 | 20 |
| Results of test cloth evaluation | Strike-through | | × | ○ | ○ | Δ | Δ |
| | Peeling strength (N/2.5 cm) | | 6 | 5 | 4.7 | 6 | 6.1 |
| | Water repellency | Initial | 5 | 5 | 5 | 4+ | 4+ |
| | | After 20 washings | 3+ | 3 | 3 | 2 | 2 |
| | Oil repellency | Initial | 5 | 5+ | 5- | 5 | 5- |

The water/oil repellent composition of Ex. 8 which does not comprise a copolymer C and the water/oil repellent composition of Ex. 9 which contains only a small percentage of copolymer C failed to prevent strike-through. With the water/oil repellent composition of Ex. 10 containing a small percentage of copolymer A and a large percentage of copolymer C, the moisture permeable waterproof coating was poor in peeling resistance, and the water repellency was not durable to washing. The water/oil repellent composition of Ex. 11 containing a large percentage of copolymer B and a small percentage of copolymer C failed to prevent strike-through. With the water/oil repellent composition of Ex. 12 containing a small percentage of copolymer B, the moisture permeable waterproof coating was poor in peeling resistance. With the water/oil repellent composition of Ex. 13 containing a small percentage of copolymer A, the water repellency was not durable to washing. The water/oil repellent composition of Ex. 14 containing a large percentage of copolymer A and a small percentage of copolymer C failed to prevent strike-through of the moisture permeable waterproof coating. With the water/oil repellent composition of Ex. 15 containing copolymer D-1 instead of copolymer A and copolymer B and the water/oil repellent composition of Ex. 16 containing no copolymer B, the moisture permeable waterproof coating was poor in peeling resistance.

With the water/oil repellent composition of Ex. 17 containing copolymer D-2 instead of copolymer A and copolymer B, and the water/oil repellent composition of Ex. 18 containing copolymer D-2 instead of copolymer A, the water repellency was not durable to washing.

### INDUSTRIAL APPLICABILITY

The water/oil repellent composition of the present invention is useful as a water/oil repellent for cloths (woven fabric, knitted fabric, nonwoven fabric, etc.), various fiber products (clothing (sportswear, coats, jumpers, workwear, uniforms, etc.), bags, industrial materials, etc.) and the like.

The entire disclosure of Japanese Patent Application No. 2018-058276 filed on March 26, 2018 including specification, claims and summary is incorporated herein by reference in its entirety.

## Claims

1. A water/oil repellent composition comprising:
a copolymer A which comprises from 40 to 95 mass%, relative to all the units constituting the copolymer, of units based on the following monomer (m1) and from 1 to 60 mass%, relative to all the units constituting the copolymer, of units based on the following monomer (m2) and may comprise less than 5 mass%, relative to all the units constituting the copolymer, of units based on the following formula (m3);
a copolymer B which comprises from 40 to 91 mass%, relative to all the units constituting the copolymer, of units based on the following monomer (m1), from 2 to 20 mass%, relative to all the units constituting the copolymer, of units based on the following monomer (m2), from 5 to 20 mass%, relative to all the units constituting the copolymer, of units based on the following monomer (m3) and from 2 to 20 mass%, relative to all the units constituting the copolymer, of units based on the following monomer (m4);
a copolymer C which comprises from 15 to 70 mass%, relative to all the units constituting the copolymer, of units based on the following monomer (m1) and from 30 to 85 mass%, relative to all the units constituting the copolymer, of units based on the following monomer (m3); and
a liquid medium,
wherein the ratio of the copolymer A to the total mass of the copolymer A, the copolymer B and the copolymer C is from 20 to 60 mass%, the ratio of the copolymer B to the total mass of the copolymer A, the copolymer B and the copolymer C is from 10 to 50 mass%, and the ratio of the copolymer C to the total mass of the copolymer A, the copolymer B and the copolymer C is from 25 to 70 mass%:
monomer (m1): a compound represented by the following formula (1):
(Z-Q)ₙX ··· (1)
wherein Z is a C₁₋₆ polyfluoroalkyl group or a group represented by any of the following formulae (2-1) to (2-3), Q is a bivalent organic group having no fluorine atoms or a single bond, n is 1 or 2, and X is a group represented by any of the following formulae (3-1) to (3-5) when n is 1, and a group represented by any of the following formulae (4-1) to (4-4) when n is 2;
CᵢF₂ᵢ₊₁O(CFZ¹CF₂O)ⱼCFZ²- ··· (2-1)
CᵢF₂ᵢ₊₁[CH₂CF₂]ᵥ- ··· (2-2)
CiF₂ᵢ₊₁[CH₂CF₂]ᵥ[CF₂CF₂]ᵣ- ··· (2-3)
wherein i is an integer of from 1 to 6, j is an integer of from 0 to 10, v is an integer of from 1 to 4, r is an integer of from 1 to 3, and each of Z¹ and Z² is independently a fluorine atom or a trifluoromethyl group;
-CR²=CH₂ ··· (3-1)
-C(O)OCR²=CH₂ ··· (3-2)
-OC(O)CR²=CH₂ ··· (3-3)
-OCH₂-Ph-CR²=CH₂ ··· (3-4)
-OCH=CH₂ ··· (3-5)
wherein R² is a hydrogen atom, a methyl group or a halogen atom, and Ph is a phenylene group;
-CH[-(CH₂)ₘCR³=CH₂]- ··· (4-1)
-CH[-(CH₂)ₘC(O)OCR³=CH₂]- ··· (4-2)
-CH[-(CH₂)ₘOC(O)CR³=CH2]- ··· (4-3)
-OC(O)CH=CHC(O)O- ··· (4-4)
wherein R³ is a hydrogen atom, a methyl group or a halogen atom, and m is an integer of from 0 to 4;
monomer (m2): vinylidene chloride or vinylidene fluoride;
monomer (m3): a (meth)acrylate having a C₁₂ or higher saturated hydrocarbon group; and
monomer (m4): vinyl chloride.

2. The water/oil repellent composition according to Claim 1, wherein the copolymer C comprises from 15 to 60 mass%, relative to all the units constituting the copolymer, of units based on the monomer (m1) and from 30 to 70 mass%, relative to all the units constituting the copolymer, of units based on the monomer (m3).

3. The water/oil repellent composition according to Claim 1 or 2, wherein the copolymer C may comprise at most 10 mass%, relative to all the units constituting the copolymer, of units based on the monomer (m2).

4. The water/oil repellent composition according to any one of Claims 1 to 3, wherein the copolymer A further comprises units based on the monomer (m4).

5. The water/oil repellent composition according to any one of Claims 1 to 4, wherein the copolymer A further comprises units based on the following monomer (m5):
monomer (m5): a monomer having no polyfluoroalkyl groups and having a crosslinkable functional group.

6. The water/oil repellent composition according to any one of Claims 1 to 5, wherein the copolymer B further comprises units based on the following monomer (m5):
monomer (m5): a monomer having no polyfluoroalkyl groups and having a crosslinkable functional group.

7. The water/oil repellent composition according to any one of Claims 1 to 6, wherein the copolymer C further comprises units based on the monomer (m4).

8. The water/oil repellent composition according to any one of Claims 1 to 7, wherein the copolymer C further comprises units based on the following monomer (m5):
monomer (m5): a monomer having no polyfluoroalkyl groups and having a crosslinkable functional group.

9. The water/oil repellent composition according to any one of Claims 1 to 8, wherein the copolymer C comprises units based on stearyl (meth)acrylate or behenyl (meth)acrylate as units based on the monomer (m3).

10. The water/oil repellent composition according to any one of Claims 1 to 9, which further comprises at least one crosslinking agent selected from the group consisting of isocyanate crosslinking agents, methylol crosslinking agents, carbodiimide crosslinking agents and oxazoline crosslinking agents.

11. An article which has a porous substrate having at least one water/oil repellent surface treated with the water/oil repellent composition as defined in any one of Claims 1 to 10, and a moisture permeable waterproof coating on at least one surface of the porous substrate.

12. The article according to Claim 11, wherein the porous substrate has a first main surface and a second main surface opposite to the first main surface,
both the first main surface and the second main surface are water/oil repellent surfaces, and
the moisture permeable waterproof coating is provided on either the first main surface or the second main surface.

13. The article according to Claim 11 or 12, wherein the porous substrate is a cloth.

14. A method for producing an article having a porous substrate, which comprises:
treating at least one surface of the porous substrate with the water/oil repellent composition as defined in any one of Claims 1 to 10 to form a water/oil repellent surface, and
forming a moisture permeable waterproof coating on at least one surface of the porous substrate by applying a coating liquid containing an ingredient of the moisture permeable waterproof coating.

15. The method for producing an article having a porous substrate according to Claim 14, wherein the porous substrate has a first main surface and a second main surface opposite to the first main surface, and
the method comprises treating both the first main surface and the second main surface with the water/oil repellent composition, and
forming the moisture permeable waterproof coating on either the first main surface or the second main surface.
